# EUROPÄISCHE PATENTSCHRIFT

(11) **EP 2 001 803 B1**
(45) Veröffentlichungstag und Bekanntmachung des Hinweises auf die Patenterteilung: **15.08.2012**
(21) Anmeldenummer: 07711953.5
(22) Anmeldetag: 15.03.2007
(51) Int. Cl.: C01B 3/00, B82Y 30/00, C01G 39/02, C01G 39/06

(54) **VERFAHREN ZUR HERSTELLUNG VON ANORGANISCHEN FULLERENARTIGEN NANOSTRUKTUREN, DANACH HERGESTELLTE NANOSTRUKTUREN UND IHRE VERWENDUNG**
PROCESS FOR PREPARING INORGANIC FULLERENE-LIKE NANOSTRUCTURES, NANOSTRUCTURES PREPARED IN THIS WAY AND THEIR USE
PROCÉDÉ DE FABRICATION DE NANOSTRUCTURES INORGANIQUES DE TYPE FULLERÈNE, NANOSTRUCTURES FABRIQUÉES SELON CE PROCÉDÉ ET LEUR UTILISATION

(30) Priorität: 21.03.2006 DE 102006012811
(43) Veröffentlichungstag der Anmeldung: 17.12.2008
(73) Patentinhaber: Johannes Gutenberg-Universität Mainz, 55099 Mainz (DE)
(72) Erfinder: ANNAL-THERESE, Helen, 14109 Berlin (DE); TREMEL, Wolfgang, 55283 Nierstein (DE); ZINK, Nicole Christin, 55116 Mainz (DE)
(74) Vertreter: Plate, Jürgen
(86) Internationale Anmeldenummer: PCT/EP2007/002274
(87) Internationale Veröffentlichungsnummer: WO 2007/107283

(56) Entgegenhaltungen:
- THERESE ET AL: "Synthesis of MoO3 nanostructures and their facile conversion to MoS2 fullerenes and nanotubes" SOLID STATE SCIENCES, ELSEVIER, PARIS, FR, Bd. 8, Nr. 10, Oktober 2006 (2006-10), Seiten 1133-1137, XP005708179 ISSN: 1293-2558
- TIAN ET AL: "Synthesis of amorphous MoS2 nanospheres by hydrothermal reaction" MATERIALS LETTERS, NORTH HOLLAND PUBLISHING COMPANY. AMSTERDAM, NL, Bd. 60, Nr. 4, Februar 2006 (2006-02), Seiten 527-529, XP005187606 ISSN: 0167-577X
- NATH M ET AL: "SIMPLE SYNTHESIS OF MOS2 AND WS2 NANOTUBES" ADVANCED MATERIALS, WILEY VCH, WEINHEIM, DE, Bd. 13, Nr. 4, 19. Februar 2001 (2001-02-19), Seiten 283-286, XP001004990 ISSN: 0935-9648 in der Anmeldung erwähnt
- FELDMAN Y ET AL: "HIGH-RATE, GAS-PHASE GROWTH OF MOS2 NESTED INORGANIC FULLERENES ANDNANOTUBES" SCIENCE, AMERICAN ASSOCIATION FOR THE ADVANCEMENT OF SCIENCE,, US, Bd. 267, 13. Januar 1995 (1995-01-13), Seiten 222-225, XP002040985 ISSN: 0036-8075
- XIONG WEN LOU ET AL: "Hydrothermal synthesis of [alpha]-MoO3 nanorods via acidification of ammonium heptamolybdate tetrahydrate" CHEMISTRY OF MATERIALS AMERICAN CHEM. SOC USA, Bd. 14, Nr. 11, November 2002 (2002-11), Seiten 4781-4789, XP002435152 ISSN: 0897-4756

## Beschreibung

Die Erfindung betrifft ein Verfahren zur Herstellung von anorganischen fullerenartigen Nanostrukturen und Nanoröhren aus Metalldisulfiden der Metalle Mo und W, danach hergestellte Nanostrukturen und ihre Verwendung.

Anorganische fullerenartige Nanopartikel und Nanoröhren bzw. Nanoröhrchen sind wegen ihrer physikalischen Eigenschaften und kristallografischen Morphologie für verschiedene Verwendungszwecke ausgezeichnet geeignet. Molybdändisulfid MoS₂ ist beispielsweise ein hervorragender Schmierstoff. Es wird auch als Standardkatalysator für HDS (= Hydrodesulfurierungsreaktionen) bei der Entschwefelung von Kraftstoffen eingesetzt.

Die Struktur von schichtartigem Molybdändisulfid besteht aus Schichten von Molybdänatomen, die sandwichartig unten und oben von einatomigen Schwefellagen eingeschlossen sind. Da die Wechselwirkungen zwischen den Schwefelschichten nur schwach sind, können diese leicht aufeinander gleiten. Es gilt im Allgemeinen, dass Schichtchalkogenide generell gute Schmierstoffe sind, wobei insbesondere Molybdändisulfid wegen seiner Temperaturstabilität und seines inerten Verhaltens auch als Hochtemperatur-Schmierstoff bei Temperaturen bis zu 400 °C einsetzbar ist. Feste Schmierstoffe mit Temperaturstabilität bis ca. 400 °C können spezielle Aufgaben in den Fällen erfüllen, in denen flüssige Schmierstoffe nicht einsetzbar sind oder unzureichende Schmiereigenschaften besitzen, etwa unter Vakuum, bei hochbelasteten Maschinenbauteilen, im Automobilbau, in der Raumfahrt. Bei diesen Anwendungsfällen werden häufig Graphit oder Molybdän- bzw. Wolframdisulfide verwendet.

Der schichtartige Aufbau von Molybdändisulfid macht dieses zu einem guten Schmierstoff, beeinträchtigt aber auch seine Fähigkeit, mit Fahrzeug-Kraftstoff oder sonstigen Brennstoffen zu reagieren, aus denen Schwefel entfernt werden soll. Der Grund hierfür ist, dass die Reaktionen, die zur Entfernung des Schwefels nötig sind, entlang der Ränder der ebenen Schichten ablaufen. Je größer deren Flächen sind, umso weniger Ränder sind im Verhältnis zu den Flächen vorhanden. Im Vergleich hierzu besitzt nanostrukturiertes Molybdändisulfid mit Partikelgrößen kleiner/gleich 20 nm, bei denen die Fulleren-Struktur noch nicht vollständig ausgebildet ist, ein für die Katalyse günstiges Verhältnis von Fläche zu Schichtrand und kann daher den Abbau der Schwefelverbindungen in Benzin und anderen fossilen Brennstoffen katalysieren. Aufgrund ihrer wesentlich größeren Oberfläche lassen MoS₂-Nanopartikel bzw. Nanoröhren eine deutliche Verbesserung in der Katalysatoraktivität erwarten. Schon eine geringe Verbesserung der Katalysatorwirkung könnte allein in Deutschland bei Entschwefelungsanlagen, die eine Kapazität von etwa 170 Mill. Tonnen haben, zu hohen Kosteneinsparungen führen, wie in den Dokumenten [1] Fedin, V. P., Czyzniewska, J., Prins, R., Weber, T., Supported molybdenum-sulfur cluster compounds as precursors for HDS catalysts. Appl. Catal. A, 2001. 213(1): p. 123-132 und [2] Afanasiev, P., Rawas, L., and Vrinat, M., Synthesis of dispersed Mo sulfides in the reactive fluxes containing liquid sulfur and alkali metal carbonates. Mater. Chem. Phys., 2002. 73(2-3): p. 295-300 beschrieben ist.

Tian et al., Materials Letters 60 (2006) 527 - 529, offenbaren nanoskalige sphärische Partikel aus amorphem MoS₂, welche mittels hydrothermalem Abbau von Ammoniumheptamolybdat (NH₄)₆Mo₇O₂₄·4H₂O bei Temperaturen von bis zu 120 °C synthetisiert wurden.

Elektrochemische Untersuchungen zeigen, dass MoS₂-Nanoröhren ein großes Speicherpotential für Wasserstoff besitzen wie in den Dokumenten [3] Chen, J., Li, S. L., and Tao, Z. L., Novel hydrogen storage properties of MoS2 nanotubes. J. Alloys Compd., 2003. 356: p. 413-417, [4] Chen, J., Kuriyama, N., Yuan, H., Takeshita, H. T., Sakai, T., Electrochemical Hydrogen Storage in MoS2 Nanotubes. J. Am. Chem. Soc., 2001. 123 p. 11813-11814 [5] Chen, J. and Wu, F., Review of hydrogen storage in inorganic fullerene-like nanotubes. Appl. Phys. A, 2004. 78(7): p. 989-994 beschrieben und somit in der Brennstoffzellentechnik eingesetzt werden können. Eine weitere Anwendung im Energiesektor ist der Einsatz von metallchalkogenidischen Nanoröhren als Elektrodenmaterial für Lithium-Ionen Batterien. Solche Batterien ermöglichen hohe Kapazitäten und eignen sich demnach für mobile Energieversorger, wie aus den Literaturstellen [6] Chen, J., Tao, Zh.-L., Li, S.-L., Lithium Intercalation in Open-Ended TiS2 Nanotubes. Angew. Chem. Int. Ed. Engl., 2003. 42: p. 2147-2151 und [7] Dominko, R., Arcon, D., Mrzel, A., Zorko, A., Cevc, P., Venturini, P., Gaberscek, M., Remskar, M., Mihailovic, D., Dichalcogenide Nanotube Electrodes for Li-Ion Batteries. Adv. Mater., 2002. 14(21): p. 1531-1534 hervorgeht. Bei dem Einsatz als Elektrodenmaterial ist wesentlich, dass diese eine möglichst hohe Ladungsdichte der Ionen ermöglichen und die Ionen beim Entladen kontrolliert wieder abgeben können.

Neben Kohlenstoff-Fullerenen und Kohlenstoff-Nanoröhren sind verwandte Strukturen von Schichtchalkogeniden bekannt. Diese fullerenartigen bzw. röhrenartig aufgebauten Strukuren besitzen wegen des sphärischen Aufbaus ihrer Bausteine erheblich bessere Schmiereigenschaften als ihre kristallinen Gegenstücke. Eine Erklärungsmöglichkeit für die besseren Schmiereigenschaften besteht darin, dass der Scherwiderstand zwischen den fullerenartigen bzw. röhrenartigen Bausteinen auf Rollreibung zurückzuführen ist, wie in [8] Rapoport, L., Fleischer, N., and Tenne, R., Fullerene-like WS2 nanoparticles: Superior lubricants for harsh conditions. Adv. Mater., 2003. 15(7-8): p. 651-655, [9] Rapoport, L., Leshchinsky, V., Lvovsky, M., Lapsker, I., Volovik, Y., Feldman, Y., Popovitz-Biro, R., and Tenne, R., Superior tribological properties of powder materials with solid lubricant nanoparticles. Wear, 2003.255: p. 794-800, [10] Rapoport, L., Feldman, Y., Homyonfer, M., Cohen, H., Sloan, J., Hutchison, J. L., and Tenne, R., Inorganic fullerene-like material as additives to lubricants: structure-function relationship. Wear, 1999. 229: p. 975-982 und [11] Rapoport, L., Leshchinsky, V., Lapsker, I., Volovik, Y., Nepomnyashchy, O., Lvovsky, M., Popovitz-Biro, R., Feldman, Y., and Tenne, R., Tribologicalproperties of WS2 nanoparticles under mixed lubrication. Wear, 2003. 255: p. 785-793 beschrieben und daher deutlich geringer ist als der Scherwiderstand der kristallinen Verbindungen, der auf Gleitreibung s.[12] Hu, J. J. and Zabinski, J. S., Nanotribology and lubrication mechanisms of inorganic fullerene-like MoS2 nanoparticles investigated using lateral force microscopy (LFM). Tribol. Lett., 2005. 18(2): p. 173-180, zwischen den Schichten beruht. Die tribologischen Eigenschaften von Nanostrukturen sind bei Mischungen aus Röhren- und Fullerenbausteinen noch günstiger, da die Kontaktflächen zwischen den Röhren und kugelförmigen Fullerenen noch weiter minimiert sind.

MoS₂-Nanoröhren, weiterhin NT-MoS₂, und fullerenartiges MoS₂, weiterhin IF-MoS₂, stellen zwei metastabile Verbindungen im binären Phasensystem Mo-S dar, deren Synthese in der Regel hohe Temperaturen und nachfolgendes Abschrecken der Produkte erfordert, um die Kristallisation zu 2H-MoS₂ zu verhindern. Die meisten publizierten Syntheseverfahren sind aufwendig und liefern inhomogene Produkte mit Ausbeuten von wenigen Milligramm,die zwar elektronenmikroskopische Untersuchungen ermöglichen, jedoch für rheologische Untersuchungen nicht mehr ausreichend sind.

Ein Verfahren und eine Vorrichtung zur Herstellung von anorganischen fullerenähnlichen Nanopartikeln sind aus der WO02/34959 A2 [13] bekannt. Ausgangsprodukt ist MoO₃, das in einer Formiergasatmosphäre durch Sulfidierung mit H₂S in einem Strömungsreaktor zu NT-MoS₂ umgesetzt wird. Hierzu wird Molybdäntrioxid MoO₃ unter vorbestimmten Temperaturbedingungen verdampft und der Molybdäntrioxiddampf mit Wasserstoff reduziert, um ein Suboxid des Molybdäns zu gewinnen. Dieses Suboxid tritt dann in Wechselwirkung mit einer organischen Schwefel- oder Selenverbindung. Das Reaktionsprodukt der Wechselwirkung zwischen den kondensierenden Molybdänsuboxid-Nanopartikeln und H₂S enthält Partikel, die jeweils aus einem Kern eines im Nanobereich liegenden MoO₃₋ₓ-Clusters und MoS₂-Beschichtungen bestehen.

Im Stand der Technik können IF-MoS₂ und NT-MoS₂ auf unterschiedlichen Wegen hergestellt werden. Zwiebelähnliche MoS₂-Strukturen mit einem Durchmesser von etwa 5 nm werden gemäß der Literaturstelle [14] José-Yacamán et al., Studies of MoS2 structures produced by electron irradiation. Appl. Phys. Lett., 1996. 69(8): p. 1065-1067, durch Elektronenbeschuss mit einer Energie von 0,5 MeV von feingemahlenem MoS₂ in einem Elektronenmikroskop erhalten. Die Partikelgröße des feingemahlenen Molybdändisulfids beträgt ca. 0,3 mm. Diese Technik erfordert eine aufwendige Vorbehandlung der Proben durch Mahlen und eine komplizierte Apparatur und liefert nur geringe Ausbeuten.

Auch die Synthese von mehrwandigen quasi-oktaedrischen Strukturen mit Durchmessern im Bereich von 3 bis 5 nm durch Laser-Ablation, wie in der Literaturstelle [15] Parilla et al., Formation of Nanooctahedra in Molybdenum Disulfide and Molybdenum Diselenide Using Pulsed Laser Vaporization. J. Phys. Chem. B, 2004. 108: p. 6197-6207 beschrieben, benötigt eine aufwendige Vorrichtung und liefert nur geringe Ausbeuten.

Sano [16] et al. Fabrication of inorganic molybdenum disulfide fullerenes by arc in water. Chem. Phys. Lett., 2003. 368: p. 331-337, beschreiben fullerenanaloge MoS₂-Hohlpartikel mit Durchmessern von 5 bis 15 nm, die durch Bogenentladung zwischen einer Graphit- und Molybdänelektrode in H₂S-haltigen wässrigen Lösungen erhalten werden. Die Bildung der sphärischen MoS₂-Partikel wird auf die Absättigung von unabgesättigten Bindungen an den Kanten der entstehenden MoS₂-Partikel im extremen Temperaturgradienten einer Plasma-Kugel im Wasser zurückgeführt Die Besonderheit dieses Verfahrens besteht darin, dass die entstehenden MoS₂-Partikel nur zwei bis drei MoS₂-Schichten und Durchmesser im Bereich von 5 bis 15 nm enthalten.

Tenne et al. [17] Growth Mechanism of MoS2 Fullerene-like Nanoparticles by Gas-Phase Synthesis. J. Am. Chem. Soc., 2000.122: p. 11108-11116, erzeugten Gramm-Mengen von 100 % fullerenartigen 10 bis 100 nm großen MoS₂-Partikeln durch Gasphasenreaktion einer oxidischen Vorstufe mit anschließender Umsetzung mit H₂S bei Temperaturen > 800 °C. Diese Methode erfordert eine genaue Kontrolle der Reaktionsbedingungen; die MoS₂-Nanopartikel enthalten darüber hinaus oft noch einen MoO₃-Kern.

Rao et al. [18] Simple Synthesis of MoS2 and WS2 Nanotubes. Adv. Mater., 2001. 13(4): p. 283-286, synthetisierten weitgehend amorphe MoS₂-Nanoröhren durch Thermolyse von (NH₄)MoS₄ bei 1200 bis 1300 °C. Diese Vorgehensweise erfordert eine hohe Synthesetemperatur und die Produkte sind vergleichsweise schlecht definiert. Darüber hinaus muss die (NH₄)MoS₄-Vorstufe zunächst synthetisiert werden.

Remskar et al. [19] Self-Assembly of Subnanometer-Diameter Single-Wall MoS2. Science, 2001. 292: p. 479-48, stellten einwandige MoS₂-Iₓ-Nanoröhren mit konstantem Durchmesser im Subnanometerbereich durch chemischen Transport mit Iod her. Die einwandigen Nanoröhren sind nur über die Transportreaktion zugänglich. Nachteilig sind bei diesem Verfahren die unklare Zusammensetzung der Nanoröhren, d.h. die Kontamination mit korrosivem Iod, die geringen Reaktionsausbeuten und langen Reaktionszeiten (bis zu 3 Wochen).

Höhere Ausbeuten an fullerenanalogem MoS₂ lassen sich - ausgehend von Mo(CO)₆ und Schwefel - durch MOCVD-Gasphasenreaktion bei Temperaturen zwischen 700 °C und 800 °C erhalten, wie aus der Literaturstelle [20] MOCVD assisted synthesis of hollow inorganic fullerene (IF) - Type MoS2 and MoSe2 nanoparticles. Adv. Mater., 2005, hervorgeht. Der Vorteil dieser Synthese, die bei Temperaturen unter 800 °C ausschließlich fullerenanaloge Produkte liefert, sind die vollständige Umsetzung zu IF-MoS₂ sowie die Möglichkeit, das Verfahren problemlos auf größere Substanzmengen übertragen zu können.

[21] Helen Annal Therese, Jixue Li, Ute Kolb, Wolfgang Tremel "Facile large scale synthesis of WS2 nanotubes from Wo3 nanorods prepared by a hydrothermal route", Solid State Sciences 7 (2005), p. 67-72, beschreiben die Synthese hexagonaler WO₃-Nanoröhren mit Durchmessern von 5 bis 50 nm und Längen von 150 bis 250 nm durch eine Niedrigtemperatur-Hydrythermale (Sol-Gel) Route unter Verwendung von Zitronensäure als Strukturmodifikator und Hexadecylamin, gelöst in Ethanol, als Additiv in einem Gel, das durch konstantes Rührer einer wässrigen Lösung erhalten wird, die eine Mischung eines Ammoniumwolframoxidhydrats und der Zitronensäure enthält. Die Wo₃-Nanoröhren werden in einem Argongasstrom erhitzt und danach einem H₂S Gas bei Temperaturen bis zu 840 °C zumindest 10 Minuten lang ausgesetzt, wodurch die Nanoröhren sulfidiert werden. Es werden an den Enden offene wie geschlossene Nanoröhren erhalten.

Die Anwendung von nanostrukturiertem MoS₂ in technischen Bereichen wie beispielsweise als Schmiermittel in der Automobilindustrie erfordert eine kostengünstige Synthese zur Herstellung in Multikilogramm-Mengen von möglichst homogenen Produkten mit sehr kleinem Scher- bzw. Rollwiderstand.

Dementsprechend stellt sich für die Erfindung die Aufgabe ein Verfahren und danach hergestellte Nanostrukturen aus Metalldisulfiden der Metalle Mo und W zu schaffen, ausgehend von einem leicht zugänglichen und preisgünstigen Ausgangsprodukt, um zeitsparend und mit hoher Ausbeute fullerenartige Nanopartikel und Nanoröhren zu erhalten.

Diese Aufgabe wird durch ein Verfahren der eingangs beschriebenen Art in der Weise gelöst, dass in einer ersten Stufe ein Iso- oder Heteropolymetallat thermisch zersetzt und ein Gemisch aus nanopartikularem Metalloxid und Metalloxidhydroxidhydrat gebildet wird, das in einer zweiten Stufe in einem Gasstrom aus Inertgas und gasförmiger Schwefelverbindung auf 600 bis 900 °C erhitzt und mindestens eine Stunde lang umgesetzt wird, wobei bei einer Sulfidierung über eine Zeitspanne von 1 bis 4 Stunden und Temperaturen zwischen 800 °C und 900 °C in der Heizzone sowohl fullerenartige Nanostrukturen als auch Nanoröhren gebildet werden.

Es kommt zu einer Wechselwirkung zwischen den Nanopartikeln und dem gasförmigen Reaktionspartner und zur Ausbildung von fullerenartigen Nanostrukturen und Nanoröhren.

In Ausgestaltung des Verfahrens wird das Ausgangsgemisch aus einem nanokristallinen Metalloxid und einem Metalloxidhydroxid unter Wärmezufuhr dem gasförmigen Reaktionspartner in Gestalt einer Schwefelverbindung ausgesetzt, um eine Sulfidierung des Metalloxids und/oder Metalloxidhydroxids zu bewirken.

Als Ausgangsgemisch wird ein Zweiphasengemisch aus nanokristallinem Molybdäntrioxid MoO₃ und einem Molybdänoxidhydroxidhydrat eingesetzt.

Als Ausgangsprodukt wird erfindungsgemäß ein Iso- oder Heteropolymetallat aus der Gruppe der Metalle Mo, W gewählt, insbesondere wird als Isopolymetallat ein Ammoniummolybdat eingesetzt. Bevorzugt wird als Ausgangsprodukt Ammoniumheptamolybdat (NH₄)₆Mo₇O₂₄·4H₂O eingesetzt. In Ausgestaltung des Verfahrens wird durch das Erhitzen des Ausgangsprodukts in der Reaktionszone ein Zweiphasengemisch aus nanokristallinem Metalloxid und nicht-stöchiometrischen Metalloxidhydroxidhydrat gebildet und aus dem Zweiphasengemisch wird das Metalloxid in nanokristalliner Form nahe dem oberen Ende der Reaktionszone auf gekühlten Wänden eines Reaktionsbehälters abgeschieden. Insbesondere wird durch Thermolyse des Ammoniumheptamolybdats (NH₄)₆Mo₇O₂₄·4 H₂O das Zweiphasengemisch aus Molybdäntrioxid MoO₃ und einem nicht-stöchiometrischen Molybdänoxidhydroxidhydrat Mo_{5,25}O_{14,25}(OH)₃(H₂O)_{1,36} gebildet.

Das Metalloxid und das Metalloxidhydroxid werden zweckmäßigerweise vor der Sulfidierung mit einem Inertgas aus der Gruppe Argon, Helium, Stickstoff zum Entfernen von Luftsauerstoff gespült und nach dem Spülen werden das Metalloxid und das Metalloxidhydroxid in einem Strom aus Inertgas und gasförmiger Schwefelverbindung bei einer Temperatur bis zu 900 °C aufgeheizt. Bei dem Inertgas handelt es sich jeweils bevorzugt um Argon. Die Sulfidierung des Metalloxids und des Metalloxidhydroxids erfolgt erfindungsgemäß in einem H₂S-Gasstrom oder einem CS₂-Inertgas-Strom bei einer Temperatur von 800 bis 900 °C in einer Heizzone zumindest eine Stunde lang.

In Weiterführung des Verfahrens erfolgt die Sulfidierung mit dem CS₂-Inertgas-Strom gemäß einem vorgegebenen Temperaturprofil in der Weise, dass die Temperatur in der Heizzone in Intervallen erhöht wird, wobei eine Temperatur bis zu 600 °C 5 bis 30 Minuten lang, anschließend eine Temperatur bis zu 750 °C 30 bis 60 Minuten lang und abschließend eine Temperatur bis zu 900 °C 1 bis 4 Stunden eingehalten wird.

Gemäß dem Verfahren werden bei einer Sulfidierung über eine Zeitspanne von 1 bis 1,5 Stunden und einer Temperatur bis zu 800 °C in der Heizzone überwiegend fullerenartige Nanostrukturen gebildet. Bei einer längeren Temperierungsdauer und bei höheren Temperaturen während der Sulfidierung werden über eine Zeitspanne von 1,0 bis 4 Stunden und Temperaturen zwischen 800 und 900 °C in der Heizzone sowohl fullerenartige Nanostrukturen als auch Nanoröhren gebildet. Dabei kann das Verhältnis von Fulleren- zu Nanoröhren-Anteilen durch Regelung der Temperatur zwischen 800 °C und 900 °C und der Sulfidierungszeit zwischen 1,0 und 4 Stunden in der Heizzone im Bereich 50:1 bis 3:1 variiert werden.

Durch die Isolierung der Reaktions-Zwischenprodukte sind Rückschlüsse auf den Bildungsmechanismus der Nanostrukturen möglich.

Die nach dem erfindungsgemäßen Verfahren hergestellten Nanostrukturen umfassen fullerenartige Nanopartikel mit Teilchendurchmessern von 10 bis 25 nm. Die Nanostrukturen, soweit sie aus fullerenartigen Nanopartikeln und Nanoröhren bestehen, umfassen Nanopartikel mit Teilchendurchmessern von 10 bis 25 nm und Nanoröhren, die Durchmesser von 10 bis 25 nm und Längen von 200 bis 300 nm besitzen.

Bei den erfindungsgemäßen Verfahren wird ein Festkörpergemisch als Edukt eingesetzt, so dass Wasserstoffgas als zusätzliches Reduktionsmittel nicht benötigt wird. Dadurch werden die Reaktionsführung und der Reaktoraufbau wesentlich vereinfacht, weil nicht mehr zwei parallel ablaufende Reaktionen bezüglicher ihrer Geschwindigkeiten miteinander korreliert werden müssen.

Mit der Erfindung werden des Weiteren die Vorteile erzielt, dass als einfach und kostengünstig herstellbares Ausgangsmaterial Ammoniummolybdat, insbesondere Ammoniumheptamolybdat eingesetzt wird, dass eine Mischung aus IF-Nanopartikeln und NT-Röhren, die ausgezeichnete triboelektrische Eigenschaften, hohe Temperaturstabilität und inertes Verhalten besitzen, erhalten wird und daher als Hochtemperatur-Schmierstoff einsetzbar ist und dass die Nanostrukturen signifikant höhere Elastizität aufweisen, wodurch sie als Schmierstoffe die durch Materialrauhigkeiten verursachten Stöße effizient abfangen können. Weitere Vorteile sind die beiden einfachen Reaktionsschritte, die hohe Ausbeute an Nanostrukturen, der einfache Aufbau einer zweistufigen Vorrichtung zur Herstellung der Nanostrukturen und der geringe Zeitaufwand von einer bis einigen wenigen Stunden für die Synthese der Nanostrukuren. Das Ausgangsmaterial ist etwa um ein Drittel billiger als die im Stand der Technik verwendeten Ausgangsmaterialien aus Metalloxiden.

Die Erfindung wird im Folgenden an Hand der Zeichnungen näher erläutert. Es zeigen:
- Figuren: schematische Darstellungen von IF-, NT- und IF- + NT-Nanostrukturen zur
- 1a bis 1c: Erläuterung von deren Scherwiderstand,
- Figur 2: Transmissionselektronenmikroskopische Aufnahmen mit normaler und hoher Auflösung (TEM/HRTEM),
- Figur 3: HRTEM-Abbildungen in der oberen Reihe und zugehörige Elektronenbeugungsaufnahmen von MoS2-Nanopartikeln, die durch Sulfidierung von nanostrukturiertem MoOx, gemäß Fig. 2, erhalten wurden,
- Figur 4: schematisch eine Vorrichtung für die Thermolyse von Ammoniummolybdat zur Gewinnung von MoOx-Nanopartikeln,
- Figur 5: schematisch eine weitere Ausführungsform einer Vorrichtung für die Thermolyse von Ammoniummolybdat zur Gewinnung von MoOx-Nanopartikeln, und
- Figur 6: schematisch eine Vorrichtung zur Sulfidierung der MoOx-Nanopartikel.

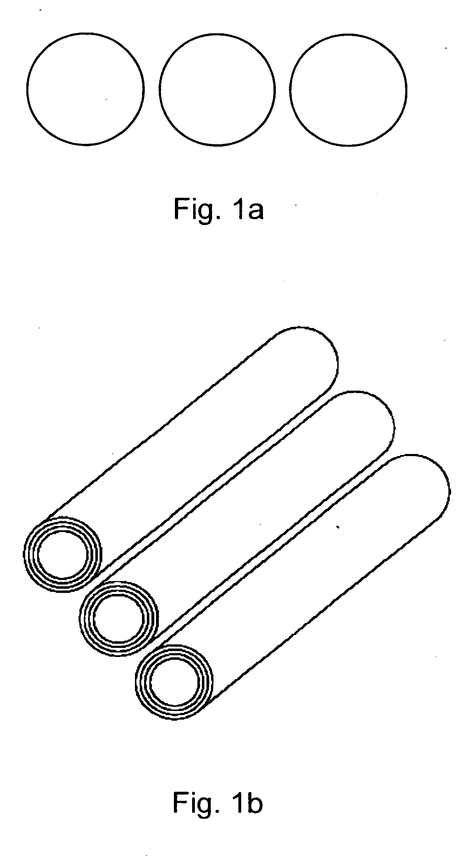

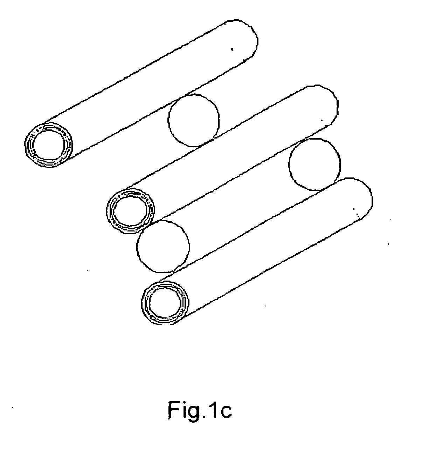

Figur 1a zeigt schematisch elastische IF-Nanostrukturen, die kugelähnliche Form haben und wegen ihrem punktuellen Kontakt untereinander einen geringeren Scherwiderstand als schichtartige oder kristalline Verbindungen aus Chalkogeniden besitzen. In Fig. 1b ist eine Agglomeration von Nanoröhren gezeigt, bei denen der Scherwiderstand zwischen den NT-Nanoröhren auf Rollreibung beruht und daher gleichfalls deutlich geringer als der Scherwiderstand von kristallinen, verwandten Verbindungen ist, bei denen der Scherwiderstand auf Gleitreibung zwischen den Schichten zurückzuführen ist. Noch günstigere tribologische Eigenschaften werden bei Mischungen aus Fulleren-Bausteinen und Nanoröhren erhalten, wie sie in Fig. 1c dargestellt sind, da bei derartigen Mischungen die Kontaktflächen zwischen den Nanoröhren und den Nano-Fullerenen im Vergleich zu den Kontaktflächen der Nanoröhren gemäß Fig. 1b minimiert sind.

Die Thermolyse eines Isopolymetallats, bei dem es sich bevorzugt um Ammoniummolybdat handelt, insbesondere um Ammoniumheptamolybdat, umfasst zwei Verfahrensschritte. Im ersten Verfahrensschritt werden oxidische Nanopartikel erhalten, indem Ammoniumheptamolybdat (NH₄)₆Mo₇O₂₄·4 H₂O in einem Behälter in Gestalt eines Röhrenofens mittels fokussierter Gas/- Luft-Heizstrahlen eines oder mehrerer Gas/Luft-Brenner erhitzt wird. Das Ausgangsprodukt Ammoniumheptamolybdat befindet sich dabei auf einer Platin-, Al₂O₃- oder Porzellanplatte oder auf einer Metallfolie wie beispielsweise einer Molybdänfolie. Die Thermolyse führt zur Bildung eines Zweiphasengemisches aus MoO₃ (hexagonal) und Mo_{5,25}O_{14,25}(OH)₃(H₂O)_{1,36}. Das letztere Reaktionsprodukt hat eine nicht-stöchiometrische Zusammensetzung und ist elementaranalytisch, jedoch nicht strukturchemisch charakterisiert.

Ein Zersetzungsprodukt des Zweiphasengemisches, nämlich oxidische Nanopartikel, werden unmittelbar oberhalb des Behälters aufgefangen. Hierzu ist ein wassergekühlter Behälter direkt oberhalb des Röhrenofens angeordnet. Die oxidischen Nanopartikel, bei denen es sich um Molybdäntrioxid-Partikel handelt, werden nahe dem oberen Ende auf den wassergekühlten Wänden des Behälters abgeschieden.

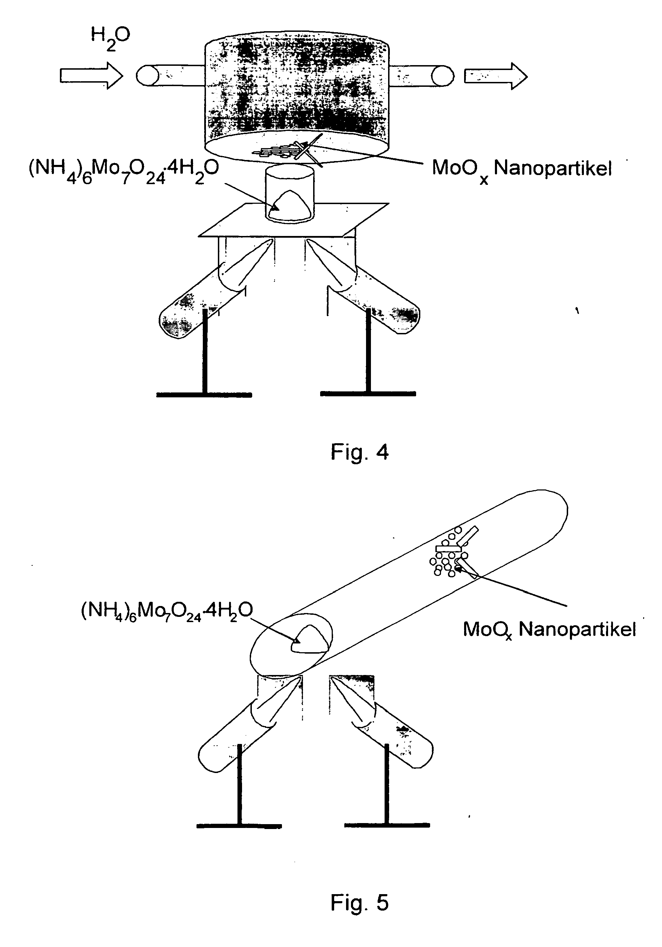

Fig. 4 zeigt schematisch eine Laborvorrichtung für die Thermolyse von Ammoniummolybdat zur Gewinnung von MoOx-Nanopartikeln. Bei dieser Laborvorrichtung werden in einem Behälter in einer Platin-, Al₂O₃- der Porzellanschale oder auf einer Metallfolie aus Molybdän 2 bis 4 g Ammoniumheptamolybdat durch zwei auf den Boden der Schale gerichtete fokussierten Heizstrahlen von Gas/Luft-Brennern erhitzt. Das Zersetzungsprodukt, die oxidischen Nanopartikel, werden mittels eines wassergekühlten Glasbehälters direkt oberhalb des Behälters bzw. der jeweiligen Schale aufgefangen.

In Fig. 5 ist schematisch eine weitere Ausführungsform einer Laborvorrichtung für die Thermolyse von Ammoniumheptamolybdat zur Gewinnung von MoOx-Nanopartikeln dargestellt. Bei dieser Laborvorrichtung wird das Ammoniumheptamolybdat am unteren Ende eines schräg nach oben gerichteten Glasrohrs angeordnet und durch die Gas/Luft-Strahlen von mindestens einem oder mehreren Brennern erhitzt. Die oxidischen Nanopartikeln scheiden sich nahe dem oberen Ende des Glasrohres ab.

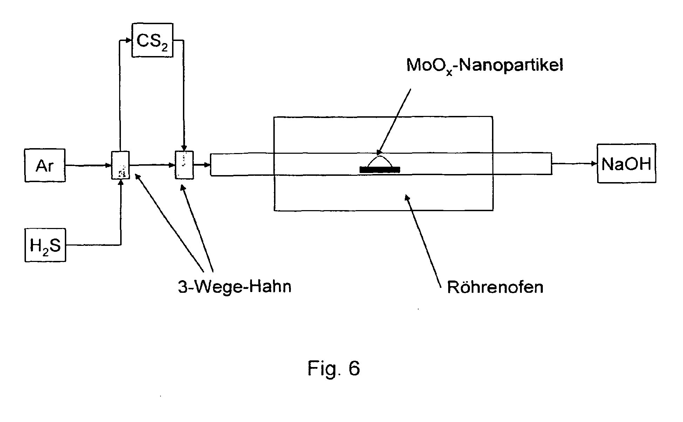

Der zweite Verfahrensschritt der Thermolyse besteht in der Sulfidierung der im ersten Verfahrensschritt erhaltenen oxidischen Nanopartikeln und wird anhand von Fig. 6 erläutert. Hierzu werden die oxidischen Nanopartikeln beispielsweise in einem Korundboot, das sich in der Mitte eines Quarzrohres befindet, eingebracht. Das Quarzrohr wird in einem Röhrenofen aufgeheizt und einem gasförmigen Reaktionspartner in Gestalt einer organischen Schwefelverbindung ausgesetzt, die eine Sulfidierung der oxidischen Nanopartikeln bewirkt. Die oxidischen Nanopartikeln sind nanokristalline Metalloxid-Partikel bzw. Molybdäntrioxid-Partikel. Vor der Sulfidierung der oxidischen Nanopartikeln wird der Röhrenofen mit einem Inertgas zum Entfernen des Luftsauerstoffs gespült. Das Inertgas wird dabei aus der Gruppe Argon, Helium, Stickstoff ausgewählt. Bevorzugt ist das Inertgas Argon. Nach dem Spülen mit dem Inertgas werden die oxidischen Nanopartikel in einem Inertgas-Strom, der eine Temperatur bis zu 900 °C hat, aufgeheizt. Es gilt allgemein, dass das Ausgangsgemisch aus einem nanokristallinen Metalloxid und einem Metalloxidhydroxid nach dem Spülen mit einem Inertgas in einem Inertgas-Strom mit einer Rate von 2 °C/min bis 10 °C/min auf bis zu 900 °C aufgeheizt wird. Sobald diese Temperatur erreicht ist, wird der Argonfluss durch einen H₂S- oder CS₂/ArgonGasstrom ersetzt und für 10 bis 90 min bei dieser Temperatur gehalten. Zum Umschalten vom Argon-Gasstrom auf einen H₂S- bzw. CS₂/Argon-Gasstrom sind zwei Drei-Wege-Ventile vorgesehen, die hintereinander geschaltet sind. Das erste Drei-Wege-Ventil ist an seiner Eingangsseite mit einer Argonquelle und einer H₂S-Quelle verbunden und seine Ausgangsseite ist an das zweite Drei-Wege-Ventil angeschlossen. Eine mit CS₂ gefüllte Flasche überbrückt die beiden Drei-Wege-Ventile. Von dem zweiten Drei-Wege-Ventil gelangt der Gasstrom direkt in das Quarzrohr, in welchem sich die oxidischen Nanopartikel befinden. Die Sulfidierung der oxidischen Nanopartikel bzw. der Metalloxidpartikel in dem H₂S-Gasstrom oder in dem CS₂-Inertgas-Strom erfolgt bei einer Temperatur von 800 °C bis 900 °C in der Heizzone, d.h. im Röhrenofen, zumindest eine Stunde lang. Die Sulfidierung geschieht mit einem bestimmten vorgegebenen Temperaturprofil in der Weise, dass die Temperatur in dem Quarzglas bzw. der Heizzone in Intervallen erhöht wird. So wird bei einem CS₂-Inertgas-Strom die Temperatur bis zu 600 °C über eine Zeitspanne von 5 bis 30 Minuten gehalten. Anschließend wird eine Temperatur bis zu 750 °C 30 bis 60 Minuten lang und abschließend eine Temperatur bis zu 900 °C 1 bis 4 Stunden eingehalten. Bei einer Sulfidierung über eine Zeitspanne von 1 bis 1,5 Stunden und einer Temperatur bis zu 800 °C in der Heizzone in einem H₂S- oder CS₂-Inertgas-Strom werden überwiegend fullerenartige Nanostrukturen gebildet, das sind beispielsweise Metallsulfid- bzw. Molybdändisulfid-Nanostrukturen. Erfolgt die Sulfidierung über eine Zeitspanne von 1 bis 4 Stunden und bei Temperaturen zwischen 800 und 900 °C in der Heizzone, werden sowohl fullerenartige Nanostrukturen als auch Nanoröhren gebildet. Die Nanostrukturen sind z. B. Metallsulfid- bzw. Molybdändisulfid-Nanostrukturen bzw. -Partikeln. Durch die Regelung der Temperatur zwischen 800 ° und 900 °C und der Sulfidierungszeit zwischen 1 und 4 Stunden in der Heizzone kann der Anteil an fullerenartigen Nanostrukturen zu dem Anteil an Nanoröhren gesteuert werden. Das Verhältnis fullerenartige Nanostrukturen zu Nanoröhren kann beispielsweise im Bereich von 50:1 bis 3:1 liegen.

Nach der Temperaturbehandlung erfolgt ein Abkühlen der Nanopartikeln, die durch Sulfidierung der oxidischen Nanopartikeln entstanden sind, in einem Gasstrom aus H₂S oder CS₂-Argon oder reinem Argon.

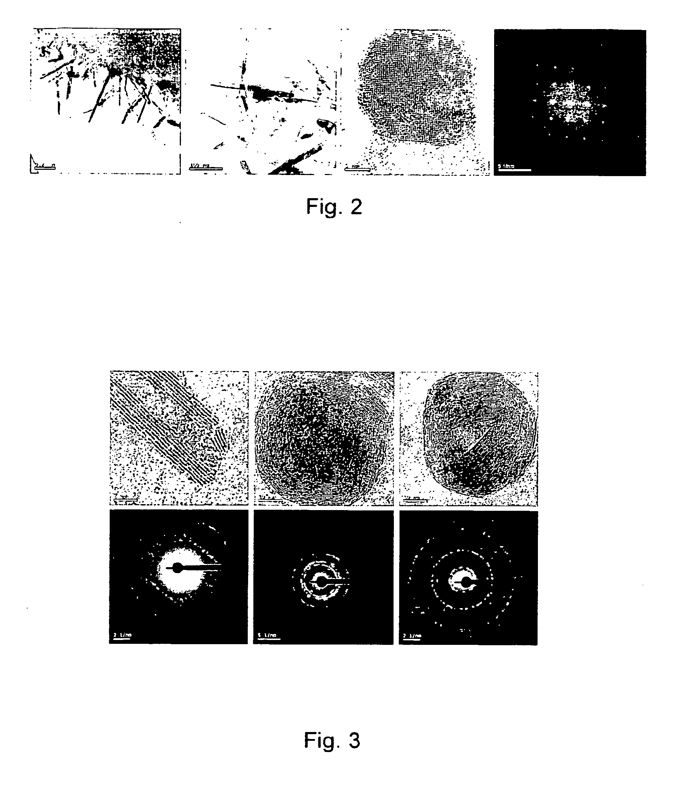

Die mit den Laborvorrichtungen erhaltenen fullerenartigen MoS₂-Nanopartikeln haben Teilchendurchmesser von 10 bis 25 nm. In Fig. 2 sind Transmissions-Elektronenmikroskopische Aufnahmen (TEM/HRTEM, d.h. in Normal- und in Hochauflösung) von nanostrukturiertem MoOx gezeigt, das durch den thermischen Abbau von Ammoniumheptamolybdat erhalten wird. Nach einer Sulfidierung dieses nanostrukturierten MoOx bei 600 bis 800 °C, entstehen hochgeordnete fullerenartige MoS₂-Nanoteilchen (IF-MoS₂), die in Fig. 3 gezeigt sind. Die obere Reihe der Fig. 3 zeigt HRTEM-Abbildungen der IF-MoS₂-Nanopartikel und die untere Reihe stellt die zugehörigen Elektronenbeugungsaufnahmen dieser Nanopartikel dar, die durch Sulfidierung der nanostrukturierten MoOx-Partikel erhalten wurden. Die Längen der Nanoröhren in Richtung der hexagonalen Achse der MoS₂-Cluster beträgt 200 bis 300 nm, die Durchmesser der Nanoröhren liegen im Bereich von 10 bis 25 nm.

Beim Auflösen von Molybdäntrioxid in wässrigem Alkali entstehen Lösungen, die das tetraedrische MoO₄²⁻-Ion enthalten und aus denen Molybdate in kristalliner Form erhalten werden können. Durch starkes Ansäuern dieser Lösungen werden Niederschläge der "Molybdänsäure" MoO₃·2 H₂O erhalten. Bei mittleren pH-Werten bilden sich polymere Anionen, die im Allgemeinen aus MoO₆-Oktaedern aufgebaut sind. Bei Erniedrigung des pH-Wertes der wässrigen Molybdänlösung auf etwa unter 6 entsteht das Heptamolybdat-Ion [Mo₇O₂₄]⁶⁻. Es bilden sich auch Anionen mit acht, zehn oder 36 Mo-Atomen. Die Bildung des Heptamolybdat lässt sich mit folgender Gleichgewichtsreaktion beschreiben

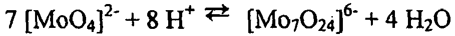

Durch Einleiten von Ammoniumhydroxid in eine derartige Molybdatlösung wird Ammoniumheptamolybdat als kostengünstiges Ausgangsprodukt für die Herstellung von Nanostrukturen gewonnen. Ammoniumheptamolybdat ist kommerziell günstig erhältlich und kann u.a. auch durch direktes Auflösen von Molybdäntrioxid in einer Ammoniumhydroxid-Lösung gewonnen werden. Die Gleichung hierzu lautet:

7 MoO₃ + 6 NH₄OH→ (NH₄)₆ Mo₇O₂₄ + 3 H₂O

Es sind auch Reaktionen mit sonstigen Polyanionen von Molybdän und Wolfram, wie z. B. [Mo₆O₁₉]²⁻, [Mo₇O₂₄]⁶⁻, [Mo₈O₂₆]⁴⁻ und [(Mo₂₆O₁₁₂)·16 H₂O]⁸⁻ sowie (W₄O₁₆)⁸⁻, (Wo₆O₁₉)²⁻, (Wo₁₀O₃₂)⁴⁻ und (H₂W₁₂O₄)⁶⁻ denkbar.

## Patentansprüche

1. Verfahren zur Herstellung von anorganischen fullerenartigen Nanostrukturen und Nanoröhren aus Metalldisulfiden der Metalle Mo und W, **dadurch gekennzeichnet, dass**
- in einer ersten Stufe ein Iso- oder Heteropolymetallat thermisch zersetzt und ein Gemisch aus nanopartikularem Metalloxid und Metalloxidhydroxidhydrat gebildet wird, das
- in einer zweiten Stufe in einem Gasstrom aus Inertgas und gasförmiger Schwefelverbindung auf 600 bis 900 °C erhitzt und mindestens eine Stunde lang umgesetzt wird, wobei bei einer Sulfidierung über eine Zeitspanne von 1 bis 4 Stunden und Temperaturen zwischen 800 °C und 900 °C in der Heizzone sowohl fullerenartige Nanostrukturen als auch Nanoröhren gebildet werden.

2. Verfahren nach Anspruch 1, **dadurch gekennzeichnet, dass** als Schwefelverbindung Schwefelwasserstoff H₂S oder Schwefelkohlenstoff CS₂ eingesetzt wird.

3. Verfahren nach Anspruch 1, **dadurch gekennzeichnet, dass** das Gemisch aus einem nanokristallinen Metalloxid und einem Metalloxidhydroxid vor der Sulfidierung mit einem Inertgas zum Entfernen von Luftsauerstoff gespült wird.

4. Verfahren nach Anspruch 3, **dadurch gekennzeichnet, dass** das Gemisch aus einem nanokristallinen Metalloxid und einem Metalloxidhydroxid nach dem Spülen mit einem Inertgas in einem Inertgas-Strom mit einer Rate von 2 °C/min bis 10 °C/min auf bis zu 900 °C aufgeheizt wird.

5. Verfahren nach einem der Ansprüche 3 und 4, **dadurch gekennzeichnet, dass** das Inertgas ein Edelgas ist.

6. Verfahren nach Anspruch 1, **dadurch gekennzeichnet, dass** während der Sulfidierung mit einem CS₂-Inertgas-Strom die Temperatur in einer Heizzone in Intervallen erhöht wird, wobei eine Temperatur bis zu 600 °C 5 bis 30 Minuten lang, anschließend eine Temperatur bis zu 750 °C 30 bis 60 Minuten lang und abschließend eine Temperatur bis zu 900 °C 1 bis 4 Stunden eingehalten wird.

7. Verfahren nach Anspruch 1, **dadurch gekennzeichnet, dass** bei einer Sulfidierung über eine Zeitspanne von 1 bis 1,5 Stunden und einer Temperatur bis zu 800 °C in der Heizzone überwiegend fullerenartige Nanostrukturen gebildet werden.

8. Verfahren nach Anspruch 1, **dadurch gekennzeichnet, dass** durch Regelung der Temperatur zwischen 800 °C und 900 °C und der Sulfidierungszeit zwischen 1 und 4 Stunden in der Heizzone der Anteil an fullerenartigen Nanostrukturen zu dem Anteil an Nanoröhren im Bereich 50:1 bis 3:1 liegt.

9. Verfahren nach einem der Ansprüche 1 bis 8, **dadurch gekennzeichnet, dass** die fullerenartigen Nanostrukturen und die Nanoröhren durch Metallsulfid-Nanopartikel gebildet werden.

10. Verfahren nach Anspruch 1, **dadurch gekennzeichnet, dass** die Zersetzungsreaktion in einer Luft oder Sauerstoff enthaltenden Atmosphäre erfolgt.

11. Verfahren nach Anspruch 1, **dadurch gekennzeichnet, dass** als Isopolymetallat ein Ammoniummolybdat eingesetzt wird.

12. Verfahren nach Anspruch 11, **dadurch gekennzeichnet, dass** durch Thermolyse des Ammoniumheptamolybdats (NH₄)₆Mo₇O₂₄ · 4 H₂O ein Zweiphasengemisch aus nanokristallinem Molybdäntrioxid MoO₃ und einem nicht-stöchiometrischen Molybdänoxidhydroxidhydrat Mo_{5,25}O_{14,25}(OH)₃(H₂O)_{1,36} gebildet wird.

13. Verfahren nach den Ansprüchen 1 bis 12, **dadurch gekennzeichnet, dass** die Synthese des Gemisches zuerst und danach die Sulfidierung des Gemisches innerhalb derselben Vorrichtung durchgeführt werden.

14. Anorganische fullerenartige Nanostrukturen und Nanoröhren aus Metalldisulfiden der Metalle Mo und W, hergestellt nach dem Verfahren gemäß den Ansprüchen 1 bis 13, **dadurch gekennzeichnet, dass** die fullerenartige Nanostrukturen einen Teilchendurchmesser von 10 bis 25 nm und die Nanoröhren einen Durchmesser von 10 bis 25 nm und eine Länge von 200 bis 300 nm aufweisen, wobei das Verhältnis von fullerenartigen Nanostrukturen zu Nanoröhren im Bereich 50:1 bis 3:1 liegt.

15. Verwendung anorganischer fullerenartiger Nanostrukturen und Nanoröhren nach Anspruch 14 als Schmiermittel oder als Zusatz zu Schmiermitteln.

16. Verwendung anorganischer fullerenartiger Nanostrukturen und Nanoröhren nach Anspruch 14 als Katalysator bei der Entschwefelung von Fahrzeug-Kraftstoffen und Brennstoffen.

17. Verwendung organischer fullerenartiger Nanostrukturen und Nanoröhren nach Anspruch 14 als Speicher für Wasserstoff in Brennstoffzellen.

18. Verwendung organischer fullerenartiger Nanostrukturen und Nanoröhren nach Anspruch 14 als Elektrodenmaterial für Lithium-Ionen Batterien.

## Claims

1. Process for preparing inorganic fullerene-like nanostructures and nanotubes composed of metal disulphides of the metals Mo and W, **characterized in that**
- in a first stage, an isopolymetalate or heteropolymetalate is thermally decomposed and a mixture of nanoparticulate metal oxide and metal oxide hydroxide hydrate is formed and the latter is
- in a second stage, heated to from 600 to 900 °C in a gas stream composed of inert gas and gaseous sulphur compound and reacted for at least one hour, resulting in both fullerene-like nanostructures and nanotubes being formed in a sulphidation over a period of from 1 to 4 hours at temperatures in the range from 800 °C to 900 °C in the heating zone.

2. Process according to Claim 1, **characterized in that** hydrogen sulphide H₂S or carbon disulphide CS₂ is used as sulphur compound.

3. Process according to Claim 1, **characterized in that** the mixture of a nanocrystalline metal oxide and a metal oxide hydroxide is flushed with an inert gas to remove atmospheric oxygen before the sulphidation.

4. Process according to Claim 3, **characterized in that** the mixture of a nanocrystalline metal oxide and a metal oxide hydroxide is, after flushing with an inert gas, heated to up to 900 °C in an inert gas stream at a rate of from 2 °C/min to 10 °C/min.

5. Process according to either Claim 3 or 4, **characterized in that** the inert gas is a noble gas.

6. Process according to Claim 1, **characterized in that** the temperature is increased in a heating zone at intervals during the sulphidation by means of a CS₂/inert gas stream, with a temperature up to 600 °C being maintained for from 5 to 30 minutes, a temperature up to 750 °C subsequently being maintained for from 30 to 60 minutes and a temperature up to 900 °C finally being maintained for from 1 to 4 hours.

7. Process according to Claim 1, **characterized in that** predominantly fullerene-like nanostructures are formed in a sulphidation over a period of from 1 to 1.5 hours at a temperature up to 800 °C in the heating zone.

8. Process according to Claim 1, **characterized in that** the ratio of the proportion of fullerene-like nanostructures to the proportion of nanotubes is in the range from 50:1 to 3:1 as a result of regulation of the temperature in the range from 800 °C to 900 °C and the sulphidation time in the range from 1 to 4 hours in the heating zone.

9. Process according to any of Claims 1 to 8, **characterized in that** the fullerene-like nanostructures and the nanotubes are formed by metal sulphide nanoparticles.

10. Process according to Claim 1, **characterized in that** the decomposition reaction is carried out in an air- or oxygen-containing atmosphere.

11. Process according to Claim 1, **characterized in that** an ammonium molybdate is used as isopolymetalate.

12. Process according to Claim 11, **characterized in that** a two-phase mixture of nanocrystalline molybdenum trioxide MoO₃ and a nonstoichiometric molybdenum oxide hydroxide hydrate Mo_{5.25}O_{14.25}(OH)₃(H₂O)_{1.36} is formed by thermolysis of ammonium heptamolybdate (NH₄)₆Mo₇O₂₄ · 4 H₂O.

13. Process according to any of Claims 1 to 12, **characterized in that** the synthesis of the mixture is carried out first and the sulphidation of the mixture is then carried out within the same apparatus.

14. Inorganic fullerene-like nanostructures and nanotubes composed of metal disulphides of the metals Mo and W, prepared by the process according to any of Claims 1 to 13, **characterized in that** the fullerene-like nanostructures have a particle diameter of from 10 to 25 nm and the nanotubes have a diameter of from 10 to 25 nm and a length of from 200 to 300 nm, with the ratio of fullerene-like nanostructures to nanotubes being in the range from 50:1 to 3:1.

15. Use of inorganic fullerene-like nanostructures and nanotubes according to Claim 14 as lubricants or as additives to lubricants.

16. Use of inorganic fullerene-like nanostructures and nanotubes according to Claim 14 as catalyst in the desulphurization of vehicle fuels and combustible materials.

17. Use of inorganic fullerene-like nanostructures and nanotubes according to Claim 14 as storage for hydrogen in fuel cells.

18. Use of inorganic fullerene-like nanostructures and nanotubes according to Claim 14 as electrode material for lithium ion batteries.

## Revendications

1. Procédé pour la fabrication de nanostructures de type fullerène et de nanotubes inorganiques à partir de disulfures métalliques des métaux Mo et W, **caractérisé en ce que**
- dans une première étape, un isopolymétallate ou un hétéropolymétallate est décomposé thermiquement et un mélange formé d'oxyde métallique nanoparticulaire et d'hydrate d'hydroxyde d'oxyde métallique est formé qui,
- dans une seconde étape, est porté, dans un flux formé de gaz inerte et d'une combinaison de soufre gazeuse, à une température de 600 à 900°C et transformé pendant au moins une heure, des nanostructures de type fullerène ainsi que des nanotubes étant formés lors d'une sulfuration sur une durée de 1 à 4 heures et pour des températures comprises entre 800°C et 900°c dans la zone de chauffage.

2. Procédé selon la revendication 1, **caractérisé en ce que**, comme combinaison de soufre, on utilise de l'hydrogène sulfuré H₂S ou du bisulfure de carbone CS₂.

3. Procédé selon la revendication 1, **caractérisé en ce que** le mélange formé à partir d'un oxyde métallique nanocristallin et d'un hydroxyde d'oxyde métallique est lavé avant la sulfuration à l'aide d'un gaz inerte pour l'élimination de l'oxygène de l'air.

4. Procédé selon la revendication 3, **caractérisé en ce que** le mélange formé à partir d'un oxyde métallique nanocristallin et d'un hydroxyde d'oxyde métallique est porté à une température pouvant atteindre 900°C après le lavage avec un gaz inerte dans un flux de gaz inerte à une vitesse de 2°C/min à 10°C/min.

5. Procédé selon l'une des revendications 3 et 4, **caractérisé en ce que** le gaz inerte est un gaz noble.

6. Procédé selon la revendication 1, **caractérisé en ce que**, pendant la sulfuration avec un flux de gaz inerte-CS₂, la température dans une zone de chauffage est augmentée par intervalles, une température maximale de 600°C est respectée pendant 5 à 30 minutes, puis une température maximale de 750°C pendant 30 à 60 minutes et enfin, une température maximale de 900°C pendant 1 à 4 heures.

7. Procédé selon la revendication 1, **caractérisé en ce que**, pour une sulfuration sur une durée de 1 à 1,5 heure et une température maximale de 800°C dans la zone de chauffage, des nanostructures de type fullerène sont formées essentiellement.

8. Procédé selon la revendication 1, **caractérisé en ce que**, par le réglage de la température entre 800°C et 900°C et du temps de sulfuration entre 1 et 4 heures dans la zone de chauffage, la part de nanostructures de type fullerène par rapport à la part de nanotubes se situe dans le domaine de 50:1 à 3:1.

9. Procédé selon l'une des revendications 1 à 8, **caractérisé en ce que** les nanostructures de type fullerène et les nanotubes sont formés par des nanoparticules de sulfure métallique.

10. Procédé selon la revendication 1, **caractérisé en ce que** la réaction de décomposition a lieu dans une atmosphère contenant de l'air ou de l'oxygène.

11. Procédé selon la revendication 1, **caractérisé en ce que** l'isopolymétallate utilisé est un molybdate d'ammonium.

12. Procédé selon la revendication 11, **caractérisé en ce que** par thermolyse de l'heptamolybdate d'ammonium (NH₄)₆Mo₇O₂₄ . 4 H₂O un mélange de phase constitué de trioxyde de molybdène nanocristallin MoO₃ et un hydrate d'hydroxyde d'oxyde de molybdène non stoechiométrique Mo_{5,25}O_{14,25}(OH)₃(H₂O)_{1,36} est formé.

13. Procédé selon les revendications 1 à 12, **caractérisé en ce que** la synthèse du mélange est d'abord exécutée et ensuite la sulfuration du mélange dans le même dispositif.

14. Nanostructures de type fullerène et nanotubes inorganiques à partir de disulfures métalliques des métaux Mo et W, préparés selon le procédé suivant les revendications 1 à 13, **caractérisés en ce que** les nanostructures de type fullerène présentent un diamètre de particule de 10 à 25 nm et les nanotubes un diamètre de 10 à 25 nm et une longueur de 200 à 300 nm, le rapport entre les nanostructures de type fullerène et les nanotubes se situant dans le domaine de 50:1 à 3:1.

15. Utilisation de nanostructures de type fullerène et de nanotubes inorganiques selon la revendication 14 comme lubrifiants ou comme suppléments à des lubrifiants.

16. Utilisation de nanostructures de type fullerène et de nanotubes inorganiques selon la revendication 14 comme catalyseurs lors de la désulfuration de carburants pour véhicules et de combustibles.

17. Utilisation de nanostructures de type fullerène et de nanotubes organiques selon la revendication 14 comme réservoirs d'hydrogène dans des piles à combustibles.

18. Utilisation de nanostructures de type fullerène et de nanotubes organiques selon la revendication 14 comme matériau d'électrodes pour batteries aux ions de lithium.
